# EUROPEAN PATENT APPLICATION

(11) **EP 1 995 889 A1**
(43) Date of publication of application: **26.11.2008**
(21) Application number: 06729268.0
(22) Date of filing: 16.03.2006
(51) Int. Cl.: H04B 7/08

(54) **DIVERSITY RECEPTION DEVICE**

(71) Applicant: Panasonic Corporation, Kadoma-shi Osaka 571-8501 (JP)
(72) Inventor: SHIOYA, Hiroyuki, Matsushita Electric Industries Co., Ltd., 2-1-61 Shiromi, Chuo-ku, Osaka 540-6207 (JP); SASAKI, Makoto, Matsushita Electric Industries Co., Ltd., 2-1-61 Shiromi, Chuo-ku, Osaka 540-6207 (JP); YOKONAGA, Hiroyuki, Matsushita Electric Industries Co., Ltd., 2-1-61 Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/305275
(87) International publication number: WO 2007/108057

(57) **Abstract**

The objective of the present invention is to provide a diversity receiver that detects differences in reception qualities for reception branches, and that controls the starting and halting of a diversity operation in accordance with the difference in the reception qualities, so that power saving is enabled and battery operating periods can be extended. A difference in reception levels (A, B) which are reception qualities for reception branches (13a, 13b), is employed to determine whether desired diversity effects are available or not. In a case wherein it is determined that desired diversity effects are not available, the diversity operation is halted and the supply of power to a reception branch that is not to be used is halted, and the combining operation is also halted.

## Description

### Technical Field

The present invention relates to a diversity receiver, for which a plurality of reception branches, each of which includes an antenna, a receiver and a demodulator, are provided.

### Background Art

Conventional diversity receivers are: an apparatus that employs antenna switching diversity and an apparatus that employs diversity combining (see, for example, patent document 1). The former system provides an advantage in that power consumption is low, and the latter system provides an advantage in that great diversity effects are obtained.

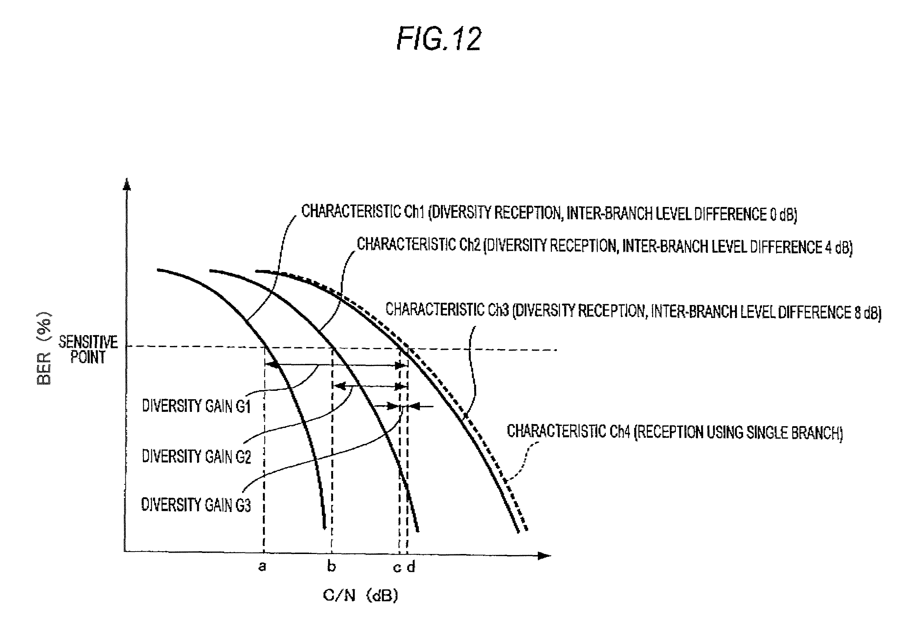

Fig. 12 is a diagram showing a diversity gain, during conventional diversity reception, relative to a reception level difference between reception branches. In this diagram, the horizontal axis represents a C/N (Carrier to Noise ratio) and the vertical axis represents a BER (Bit Error Rate), and as shown in the figure, the BER characteristics for cases wherein reception level differences between reception branches during diversity reception are 0 dB, 4 dB and 8 dB and the BER characteristic acquired when reception is performed using a single branch. Characteristic Ch1 is the BER characteristic for a case wherein 0 dB is the level difference between reception branches during diversity reception. Characteristic Ch2 is the BER characteristic for a case wherein 4 dB is the level difference between reception branches during diversity reception. Characteristic Ch3 is the BER characteristic for a case wherein 8 dB is the level difference between reception branches during the diversity reception. And characteristic Ch4 is the BER characteristic acquired when reception is performed using a single branch. A point a, a point b, a point c and a point d are C/N values at points of sensitivity for the characteristics Ch1, Ch2, Ch3 and Ch4 along the BER, respectively.

Furthermore, a diversity gain G1 is a diversity gain (the point d - the point a) at a sensitive point for the Ch1 which is the BER characteristic acquired for a case wherein 0 dB is the reception level difference between the reception branches during diversity reception, relative to the Ch4 which is the BER characteristic acquired when reception is performed using a single branch. Similarly, a diversity gain G2 is a diversity gain (the point d - the point b) at a sensitive point for the characteristic Ch2 which is the BER characteristic acquired for a case wherein 4 dB is the level difference between the reception branches during diversity reception, relative to the characteristic Ch4 that is the BER characteristic acquired when reception is performed using a single branch. Likewise, a diversity gain G3 is a diversity gain (the point d - the point c) at a sensitive point for the characteristic Ch3 which is the BER characteristic acquired for a case wherein 8 dB is the level difference between the reception branches during diversity reception, relative to the characteristic Ch4 that is the BER characteristic acquired when reception is performed using a single branch.

When the level difference between reception branches is increased, the BER characteristic for the diversity reception becomes similar to the BER characteristic for the reception using a single branch, and a diversity gain obtained for the diversity reception is reduced. That is, in a case wherein a level difference between reception branches is large to a degree, the BER characteristic is similar to that for a case wherein reception is performed using a single branch.

Japanese Patent Document 1: JP-A-2000-183793

### Disclosure of the Invention

### Problems that the Invention is to Solve

However, since a conventional diversity receiver does not take into account the magnitude of a diversity gain when performing a diversity operation, a problem is that electric power is wasted. That is, in a case wherein there is a difference in antenna gain between reception branches, or wherein a noise figure (NF) or a gain differs for reception branches, and in a situation wherein diversity effects can not be obtained because a reception quality (e.g., a reception level) greatly varies depending on reception branches, a diversity operation is still performed, and electric power is unnecessarily consumed. When electric power is wasted, especially for a small electronic apparatus, such as cellular phone, that employs a compact battery, the operating period for the battery can not be extended. That is, conventionally, a diversity combining operation that requires a large amount of power is unnecessarily performed, and accordingly, an increased amount of power is wasted and the battery operating period is reduced.

While taking these situations into account, one objective of the present invention is to provide a diversity receiver that can perform a diversity operation in accordance with the magnitude of a diversity gain.

### Means for Solving the Problems

The above described objective is achieved by employing the following configuration.
According to the present invention, a diversity receiver equipped with a plurality of reception branches each having an antenna, a receiver and a demodulator, includes:
a reception quality difference detection unit which detects differences, among the plurality of the reception branches, in reception qualities respectively obtained by the plurality of the reception branches; and
a diversity operation control unit which changes a ratio of a diversity reception operation that employs the plurality of reception branches to a single-reception operation that employs only a single branch in accordance with the differences in the reception qualities of the plurality of reception branches, to control both starting and halting of a diversity operation.

According to the present invention, the diversity receiver according to the invention, further includes:
a power source control unit which controls a power supply for the plurality of the reception branches, respectively; and
a combining process unit which combines demodulated signals obtained from the plurality of reception branches,
wherein the power source control unit supplies power to the plurality of the reception branches during the diversity reception operation performed by the diversity operation control unit, and halts the supply of power to the reception branch that does not perform a reception operation among the plurality of the reception branches during the single-branch reception operation performed by the diversity operation control unit, and
wherein the combining process unit halts the combining operation when the diversity operation control unit performs the single-branch reception operation.

In the diversity receiver of the present invention, the reception quality difference detection unit detects differences in reception qualities by employing one or more of the following elements for the plurality of the reception branches: reception levels, AGC levels, bit error rates, packet error rates and carrier to noise ratios.

According to the present invention, a program for a diversity receiver equipped with a plurality of reception branches each having an antenna, a receiver and a demodulator, includes the steps of:
detecting differences, among the plurality of reception branches, in reception qualities respectively obtained by the plurality of the reception branches; and
changing a ratio of a diversity reception operation that employs the plurality of reception branches to a single-reception operation that employs only a single branch in accordance with the differences in the reception qualities of the plurality of reception branches, to control both starting and halting of a diversity operation
and thereby permitting a computer to perform the steps.

### Advantages of the Invention

Since the diversity receiver of the present invention starts or halts the diversity operation in consonance with the diversity effects obtained, power saving is enabled, and when the diversity receiver is applied for a small electronic apparatus such as a cellular phone, a battery operating period can be extended.

### Brief Description of the Drawings

Fig. 1 is a schematic brock diagram illustrating the configuration of a diversity receiver according to an embodiment 1 of the present invention;
Fig. 2 is a diagram illustrating a fluctuation example for reception levels at the respective reception branches of the diversity receiver according to the embodiment 1 of the present invention;
Fig. 3 is a diagram illustrating a fluctuation example for reception levels at the respective reception branches of the diversity receiver according to the embodiment 1 of the present invention;
Fig. 4 is a flowchart for explaining the control provided for starting and for halting the diversity operation of the diversity receiver according to the embodiment 1 of the present invention;
Fig. 5 is a schematic block diagram illustrating the configuration of a diversity receiver according to an embodiment 2 of the present invention;
Fig. 6 is a diagram showing a fluctuation example for bit error rates, BER, at the individual reception branches of the diversity receiver according to the embodiment 2 of the present invention;
Fig. 7 is a diagram showing a fluctuation example for bit error rates, BER, at the individual reception branches of the diversity receiver according to the embodiment 2 of the present invention;
Fig. 8 is a flowchart for explaining the control for starting and for halting the diversity operation of a diversity receiver according to an embodiment 3 of the present invention;
Fig. 9 is a flowchart for explaining the control for starting and for halting the diversity operation of a diversity receiver according to an embodiment 4 of the present invention;
Fig. 10 is a flowchart for explaining the control for starting and for halting the diversity operation of a diversity receiver according to an embodiment 5 of the present invention;
Fig. 11 is a flowchart for explaining the control for starting and for halting the diversity operation of a diversity receiver according to an embodiment 6 of the present invention; and
Fig. 12 is a diagram showing a diversity gain, for a conventional diversity reception, relative to differences in reception levels among reception branches.

### Description of Reference Numerals and Signs

1 a, 1b: antenna
2a, 2b: receiver
3a, 3b: demodulator
4: combining processor
5: reception quality difference detector
6: diversity operation controller
7: power source controller
13a, 13b: reception branch

### Best Modes for Carrying Out the Invention

Preferred embodiments for carrying out the present invention will now be described in detail while referring to drawings.

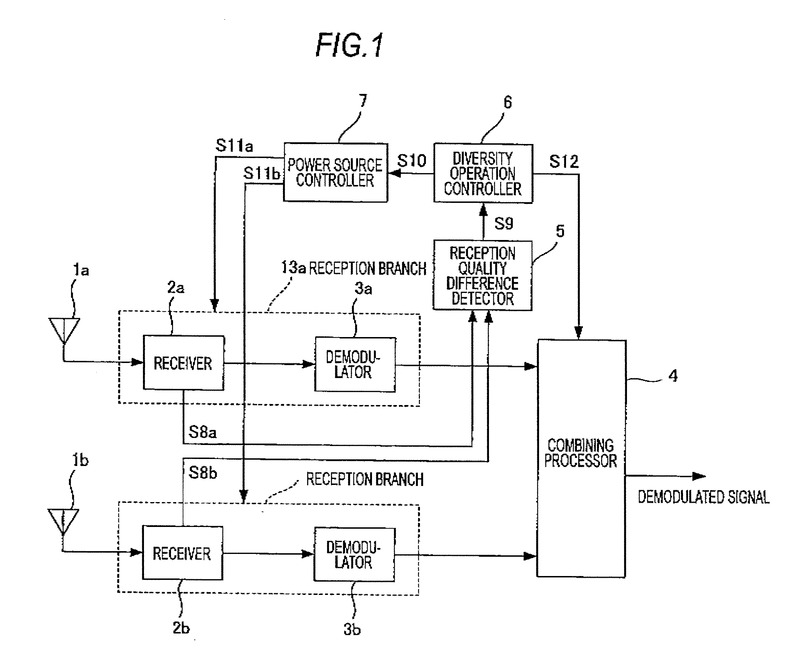

Fig 1 is a schematic block diagram illustrating the configuration of a diversity receiver according to embodiments 1 of the present invention. While referring to this drawing, the diversity receiver of this embodiment receives, for example, a terrestrial digital broadcast, and includes two branches, i.e., a reception branch 13a and a reception branch 13b. The reception branch 13a includes: an antenna 1a; a receiver 2a for receiving a radio frequency (RF) signal captured by the antenna 1a, and for converting the RF signal into a baseband signal and outputting the baseband signal; and a demodulator 3a, for demodulating a baseband signal transmitted by the receiver 2a and outputting a digital signal. The reception branch 13b, as well as the reception branch 13a, includes: an antenna 1b, a receiver 2b, for receiving a radio frequency (RF) signal captured by the antenna 1b and for converting the RF signal into a baseband signal and outputting the baseband signal; and a demodulator 3b, for demodulating a baseband signal transmitted by the receiver 2b and outputting a digital signal. The receivers 2a and 2b transmit reception signals S8a and S8b to a reception quality difference detector 5.

In addition to the above described configuration, the diversity receiver of this embodiment includes: a combining processor 4 for combining digital signals received from the individual demodulators 3a and 3b; the reception quality difference detector 5 for detecting a difference between the reception signals S8a and S8b obtained by the receivers 2a and 2b; a diversity operation controller 6 for determining the starting and halting of a diversity operation based on the detection results obtained by the reception quality difference detector 5, and for transmitting an instruction signal S10 to a power source controller 7 in accordance with the determination results; and the power source controller 7 for controlling a power supply for the reception branches 13a and 13b in accordance with the instruction signal S10 received from the diversity operation controller 6.

The reception quality difference detector 5 includes an A/D conversion circuit (not shown), which performs digital conversion for the reception signals S8a and S8b transmitted by the receivers 2a and 2b, and detects a difference in them. That is, the reception signal S8a obtained by the receiver 2a and the reception signal S8b obtained by the receiver 2b are converted into digital signals, and a difference in them is calculated to generate a differential signal S9 and the differential signal S9 is transmitted to the diversity operation controller 6. In consonance with the differential signal S9 received from the reception quality difference detector 5, the diversity operation controller 6 changes a ratio of the diversity reception operation performed using the two reception branches 13a and 13b, relative to the reception operation performed using a single branch, either 13a or 13b, and controls the starting and the halting of the diversity operation. That is, the diversity operation controller 6 employs the differential signal S9 to determine whether desired diversity effects are available, and generates instruction signals S10 and S12 to instruct either the starting or the halting of the diversity operation.

That is, the diversity operation controller 6 compares with the differential signal S9 a predetermined value X, which is used to determine whether desired diversity effects are available. In a case wherein the differential signal S9 is greater than the predetermined value X, it is determined that desired diversity effects can not be obtained, and the control process for halting the diversity operation is performed. That is, the instruction signals S10 and S12 are generated to instruct the halting of the diversity operation, and are transmitted to the power source controller 7 and the combining processor 4. On the other hand, in a case wherein the differential signal S9 is equal to or smaller than the predetermined value X, it is determined that desired diversity effects can be obtained, and a control process that does not halt the diversity operation is performed. That is, the instruction signals S10 and S12 are generated to instruct the starting of the diversity operation, and are transmitted to the power source controller 7 and the combining processor 4.

A determination for the differential signal S9, relative to the predetermined value X, is performed for a predetermined period of time and a predetermined number of times. The predetermined value X, a predetermined period of time and a predetermined number of times are set by a CPU (Central Processing Unit), a ROM (Read Only Memory) and a RAM (Random Access Memory) (none of them shown).

In a case wherein the instruction signal S12, transmitted by the diversity operation controller 6, does not indicate the halting of the diversity operation, the combining processor 4 outputs a demodulation signal obtained by combining digital signals received from the demodulators 3a and 3b. On the other hand, in a case wherein the instruction signal S12 indicates the halting of the diversity operation, the combining processor 4 does not combine the digital signals received from the demodulators 3a and 3b, and outputs either of these signals for use as a demodulation signal. In a case wherein the instruction signal S10 received from the diversity operation controller 6 does not indicate the halting of the diversity operation, the power source controller 7 transmits power supply signals S11a and S11b to supply power to the reception branches 13a and 13b. In a case wherein the instruction signal S10 indicates the halting of the diversity operation, the power source controller 7 supplies power to the reception branches 13a and 13b that are in use, and halts the supply of power to the reception branch that is not in use. For example, in a case wherein the reception branch 13a is to be employed, the power supply signal S11a is transmitted only to the reception branch 13a. In an opposite case, the power supply signal S11b is transmitted only to the reception branch 13b.

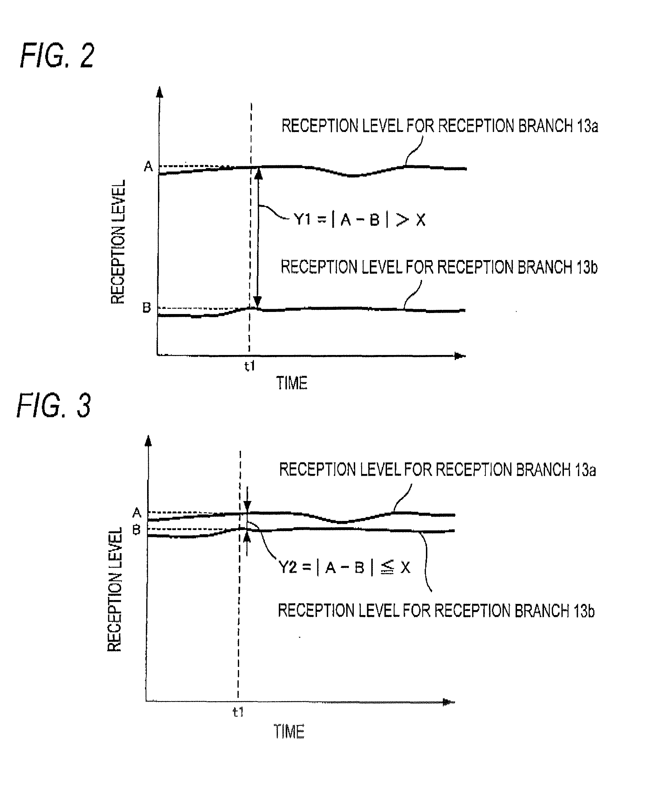

Fig. 2 and Fig. 3 are diagrams showing example level fluctuations for reception signals at the reception branches 13a and 13b of the diversity receiver according to this embodiment. In Fig. 2 and Fig. 3, a reception level A is the signal level of the reception signal S8a for the receiver 2a at a timing t1. A reception level B is the signal level of the reception signal S8b for the receiver 2b at the timing t1.

In Fig. 2, a difference Y1 between the reception level A and the reception level B is a difference in the reception qualities between the reception branch 13a and the reception branch 13b. The difference Y1 is transmitted as the differential signal S9 to the diversity operation controller 6, and is compared with the predetermined value X, which is used to determine whether the desired diversity effects are available. This is a case wherein the differential signal S9 is greater than the predetermined value X, and in this state, there is a great difference in the reception qualities between the reception branch 13a and the reception branch 13b, and desired diversity effects can not be obtained. In Fig. 3, a difference Y2 between a reception level A and a reception level B is a difference in the reception qualities between the reception branch 13a and the reception branch 13b. The difference Y2 is transmitted as the differential signal S9 to the diversity operation controller 6, and is compared with the predetermined value X, which is used to determine whether the desired diversity effects are available. This is a case wherein the differential signal S9 is equal to or smaller than the predetermined value X, and in this state, there is a small difference in the reception qualities between the reception branch 13a and the reception branch 13b, and the desired diversity effects can be obtained.

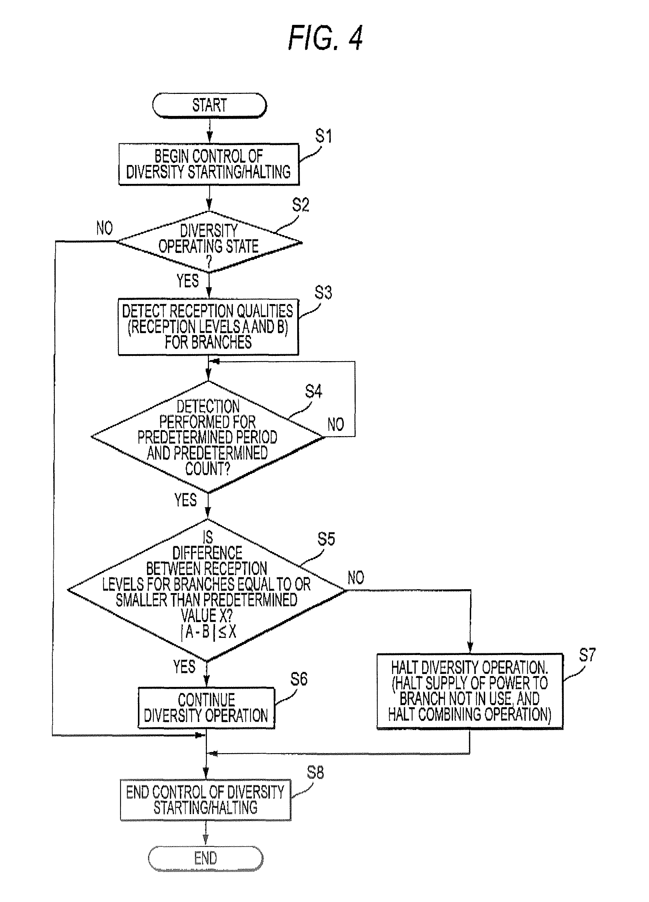

Fig. 4 is a flowchart for explaining the control performed by the diversity receiver according to this embodiment, for starting and for halting the diversity operation. In Fig. 4, steps S1 to S8 represent control steps for starting and for halting the diversity operation. First, as an interrupt process performed immediately after the diversity operation is started, or is performed during the diversity operation, the diversity operation controller 6 starts the diversity start/halt control (step S1). After the diversity start/halt control has been initiated, the diversity operation controller 6 determines whether the reception branch 13a and the reception branch 13b are currently performing the diversity operation (step S2). When the diversity operation is currently not being performed, the processing is terminated. When the diversity operation is currently being performed, the reception quality difference detector 5 detects the reception qualities of the reception branches 13a and 13b (the reception levels A and B in Fig. 2 and Fig. 3) (step S3).

Sequentially, a check is performed to determine whether a difference in the reception qualities has been detected for a predetermined period of time and a predetermined number of times (step S4). That is, the diversity operation controller 6 detects a difference (a difference Y1 or Y2 in Fig. 2 or Fig. 3) in the reception qualities for a predetermined period of time and a predetermined number of times. For example, the average value is employed when one second is set as a predetermined period and once is set as a predetermined number of times. In a case wherein a difference in reception qualities has not yet been detected for a predetermined period of time and a predetermined number of times, the determination process is repeated until this detection has been completed. In a case wherein a difference in reception qualities has been detected for a predetermined period of time and a predetermined number of times, program control is shifted to step S5. At step S5, the difference in the reception qualities (difference Y1 or Y2 in Fig. 2 or Fig. 3) is compared with the predetermined value X, which is used to determine whether the desired diversity effects are available. At this time, in a case, as shown in Fig. 2, wherein the difference Y1 is greater than the predetermined value X, the decision NO is obtained, and program control is shifted to step S7. On the other hand, in a case, as shown in Fig. 3, wherein the difference Y2 is equal to or smaller than the predetermined value X, the decision YES is obtained, and program control is shifted to step S6. At step S6, the diversity operation for the reception branches 13a and 13b is continued. On the other hand, at step S7, the diversity operation is halted. That is, one of the reception branches 13a and 13b is defined as a reception branch not in use, and supply of power by the power source controlled 7 is halted. Further, the combining operation is also halted. At step S8, the diversity start/halt control is terminated. It should be noted that the diversity start/halt control is performed as an interrupt process.

As described above, according to the diversity receiver of this embodiment, whether desired diversity effects are available is determined based on a difference between the reception level A which is the reception quality of the reception branch 13a, and the reception level B which is the reception quality of the reception branch 13b. In a case wherein it is determined that desired diversity effects can not be obtained, the diversity operation is halted, and the supply of power to a reception branch that is not to be used is halted and the combining operation is also halted. Thus, a saving in power is obtained, and in a case wherein the receiver is applied for a compact electronic apparatus, such as a cellular phone, an operating period for a battery can be extended.

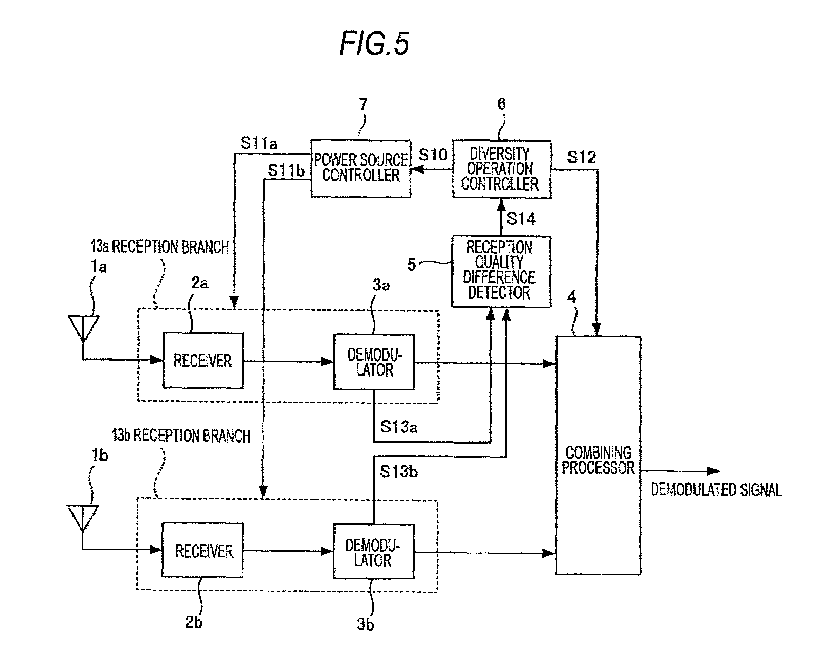

Fig. 5 is a schematic block diagram illustrating a diversity receiver according to embodiment 2 of the present invention. While referring to Fig. 5, as well as the diversity receiver described above for embodiment 1, the diversity receiver of this embodiment includes two branches, i.e., reception branches 13a and 13b, and controls a diversity operation using a bit error rate (BER) as a reception quality. Further, in Fig. 5, since components for which the same symbols as those in Fig. 1 are provided perform the same operations, an explanation for them will not be given. A reception quality difference detector 5 includes an A/D conversion circuit (not shown), and detects a difference in the reception qualities between the reception branches 13a and 13b. That is, bit error rates S13a and S13b are received from demodulators 3a and 3b, a difference between them is detected and a differential signal S14 is transmitted to a diversity operation controller 6.

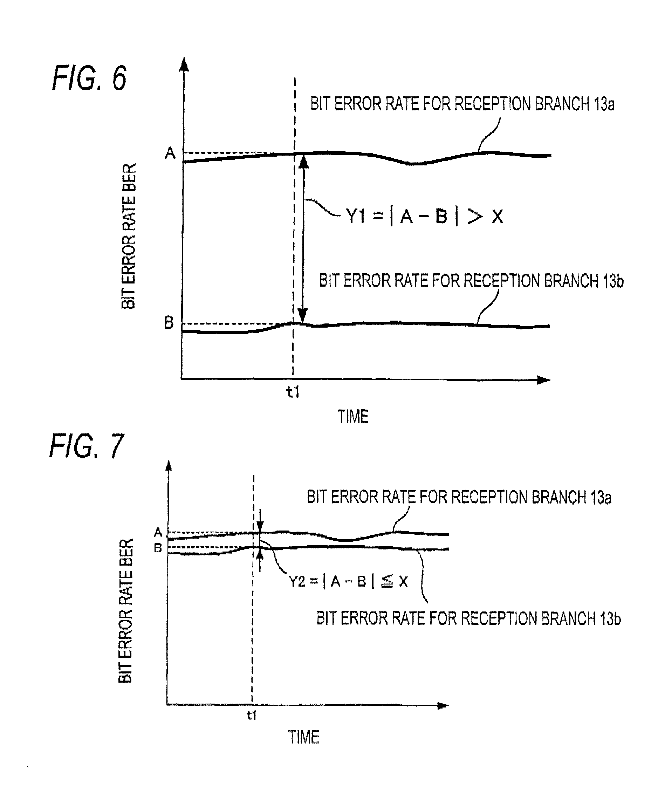

Fig. 6 and Fig. 7 are diagrams showing example fluctuations for bit error rates (BERs) at the reception branches 13a and 13b of the diversity receiver according to this embodiment. In Fig. 6 and Fig. 7, a bit error rate A is a bit error rate S13a for the demodulator 3a at a timing t1. A bit error rate B is a bit error rate S13b for the demodulator 3b at the timing t1. Specifically, in Fig. 6, a difference Y1 between the bit error rates A and B represents a difference in the reception qualities for the reception branches 13a and 13b. The difference Y1 is transmitted, as a differential signal S14, to the diversity operation controller 6, and is compared with a predetermined value X, which is used to determine whether desired diversity effects are available. This is a case wherein the differential signal S14 is greater than the predetermined value X, and in this state, there is a great difference between the reception qualities of the reception branches 13a and 13b, and desired diversity effects can not be obtained.

Similarly, in Fig. 7, a difference Y2 between the bit error rates A and B is a difference in the reception qualities for the reception branches 13a and 13b. The difference Y2 is transmitted, as a differential signal S14, to the diversity operation controller 6, and is compared with the predetermined value X, which is used to determine whether the desired diversity effects are available. This is a case wherein the differential signal S14 is equal to or smaller than the predetermined value X, and in this state, there is a small difference in the reception qualities of the reception branches 13a and 13b and the desired diversity effects can be obtained.

Since the control for starting and halting the diversity operation of the diversity receiver of this embodiment is substantially the same as the above described control for starting and halting the diversity operation of the diversity receiver according to embodiment 1, only a different portion will be described (see Fig. 4).

First, the reception quality difference detector 5 detects the reception qualities (bit error rates A and B in Fig. 6 and Fig. 7) of the individual reception branches 13a and 13b (step S3). The diversity operation controller 6 determines whether detection of a difference (a difference Y1 or Y2 in Fig. 6 and Fig. 7) in the reception qualities has been performed for a predetermined period of time and a predetermined number of times (step S4). For example, the average value is employed when one second is set as a predetermined period and once is set as a predetermined number of times. In a case wherein the decision is NO, the process is repeated until the decision of YES is obtained, and when the decision is YES, program control is shifted to step S5. At step S5, the difference (the difference Y1 or Y2 in Fig. 6 and Fig. 7) is compared with the predetermined value X, which is used to determine whether the desired diversity effects are available. In a case, as shown in Fig. 6, wherein the difference Y1 is greater than the predetermined value X, the decision is NO, and program control is shifted to step S7. On the other hand, in a case, as shown in Fig. 7, wherein the difference Y2 is equal to or smaller than the predetermined value X, the decision is YES, and program control is shifted to S6.

As described above, according to the diversity receiver of this embodiment, whether the desired diversity effects are available is determined based on a difference between the bit error rate (BER) A, which is the reception quality for the reception branch 13a, and the bit error rate (BER) B, which is the reception quality for the reception branch 13b. In a case wherein it is determined that desired diversity effects can not be obtained, the diversity operation is halted to stop the supply of power to a reception branch not in use, and the combining operation is also halted. Thus, a savings in power is obtained, and in a case wherein the diversity receiver is applied for a compact electronic apparatus, such as a cellular phone, a battery operating period can be extended.

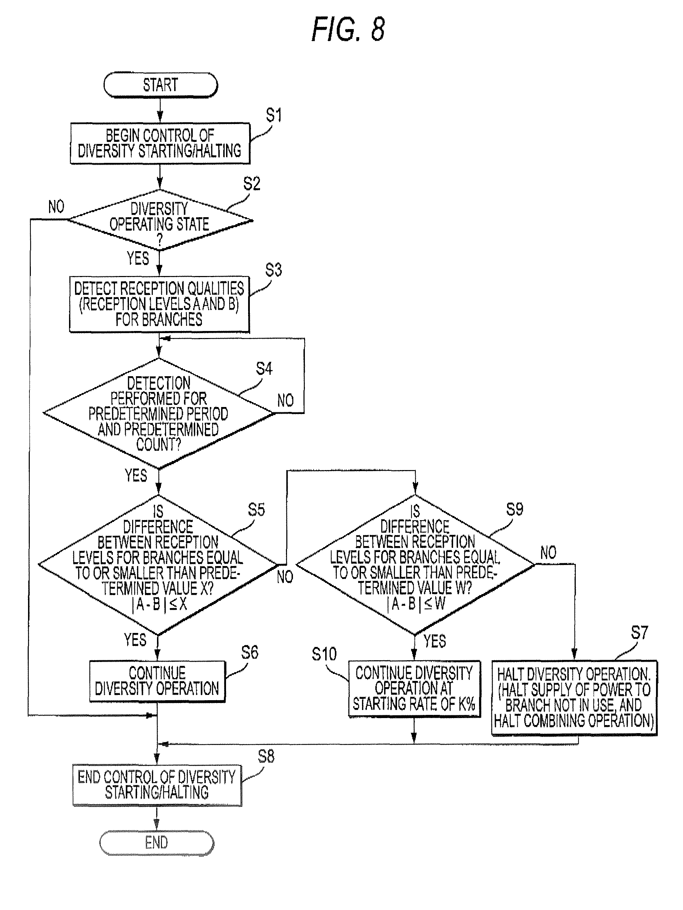

Fig. 8 is a flowchart for explaining the control, performed by the diversity receiver according to embodiment 3 of the present invention, for starting or halting the diversity operation. In Fig. 8, steps S1 to S8 represent control steps for starting and halting the diversity operation, and since the same operations as those in Fig. 4 are performed at steps for which the same symbols as in Fig. 4, shown in Fig. 8 are provided, no further explanation for them will be given.

At step S5 in Fig. 8, in a case wherein a predetermined value X is set to 2 dB, for example, and a difference between reception levels A and B is equal to or smaller than the predetermined value X = 2 dB, the decision YES is obtained and program control is shifted to step S6. At step S6, the diversity operation for reception branches 13a and 13b continues to be operated at a starting rate of 100%. At this time, the starting rate is a rate at which the diversity operation is operated for a specific time, and the starting rate of 100% indicates that the diversity operation continues to be operated for a predetermined time. Further, a starting rate of 0% indicates that the diversity operation continues to be halted.

On the other hand, in a case wherein a difference between the reception levels A and B is greater than the predetermined value X = 2 dB, the decision is NO and program control is shifted to step S9. At step S9, a predetermined value W is set to 4 dB, for example, so as to establish the predetermined value X < W, and then, a difference in the reception qualities (the difference Y1 in Fig. 2 or the difference Y2 in Fig. 3) is compared with the predetermined value W, which is used to determine whether desired diversity effects are available. In a case, as shown in Fig. 2, wherein the difference Y1 is greater than the predetermined value W = 4 dB, the decision is NO, and program control is shifted to step S7. On the other hand, in a case, as shown in Fig. 3, wherein the difference Y2 is equal to or smaller than the predetermined value W = 4 dB, the decision is YES, and program control is shifted to step S10.

At step S10, the diversity operation for the reception branches 13a and 13b is started at the starting rate K%. At this time, the starting rate K% is 0% < K < 100%, and a case of, for example, the starting rate K = 90% is the state wherein the diversity operation is operated for 90% of a specific period of time, and is halted for 10%.

In the above described embodiment 1, one predetermined value X has been employed to determine whether the desired diversity effects are available, and the determination process for starting and halting the diversity operation has been performed. In this embodiment, however, a plurality of predetermined values X and W are provided to determine whether the desired diversity effects are available, and for controlling the starting and halting of the diversity operation, the ratio of the diversity reception operation relative to the single-branch reception operation is changed in accordance with a difference in the reception qualities of the reception branches 13a and 13b.

As described above, according to the diversity receiver of this embodiment, whether desired diversity effects are available is determined based on a difference between the reception levels A and B that are the reception qualities for the reception branches 13a and 13b. And in a case wherein it is determined that the desired diversity effects can not be obtained, the starting rate for the diversity operation is changed, and during the reception operation using a single branch, the supply of power to a reception branch that is not in use is halted, and the combining operation is also halted. Therefore, since the diversity operation is halted in consonance with the availability status of diversity effects, power saving is enabled, and in a case wherein the receiver is applied for a compact electronic apparatus, such as a cellular phone, a battery operating period can be extended.

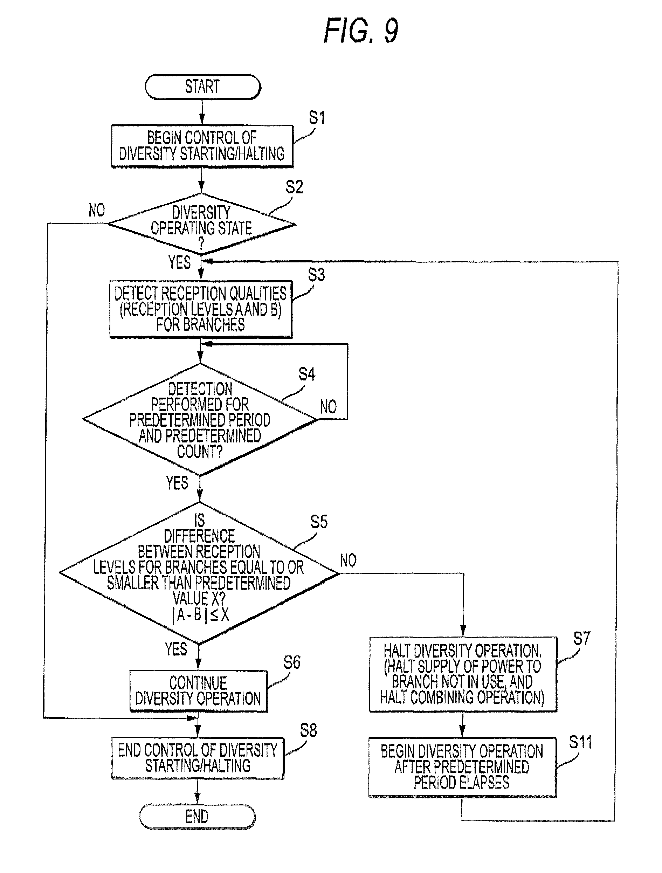

Fig. 9 is a flowchart for explaining the control, performed by a diversity receiver according to embodiment 4 of the present invention, for starting and halting the diversity operation. A difference in Fig. 9 is that only step S11 is additionally provided for Fig. 4, and since the same operations are performed at steps for which the same symbols as used in Fig. 4 are provided, no further explanation for them will be given.

The process at step S11 in Fig. 9 indicates an operation to be performed after the diversity operation has been halted at step S7. After a predetermined period of time, e.g., one second, has elapsed, the diversity operation is started, and program control is shifted to step S3. Through this operation, a determination process is performed to return to the diversity operation after the diversity operation has been halted at step S7.

As described above, according to the diversity receiver of this embodiment, in a case wherein the diversity operation is halted because it is determined that desired diversity effects are not available, the diversity operation is resumed after a predetermined period of time has elapsed. Therefore, unless the apparatus is powered off, the diversity operation can be performed continuously.

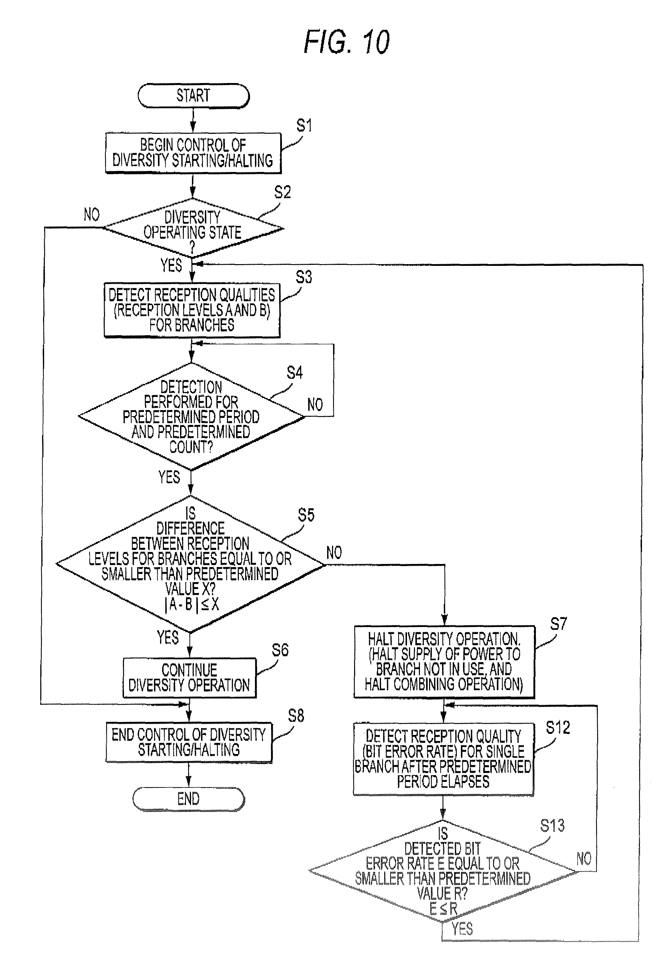

Fig. 10 is a flowchart for explaining the control, performed by a diversity receiver according to embodiment 5 of the present invention, for starting and halting the diversity operation. A difference in Fig. 10 is that steps S12 and S13 are additionally provided for Fig. 4, and since the same operations are performed at steps for which the same symbols as in Fig. 4 are provided, no further explanation for them will be given.

At step S12 in Fig. 10, the process at step S12 is an operation performed after the diversity operation has been halted at step S7. When a predetermined period of time, e.g., one second, has elapsed, the reception quality of a single branch, e.g., a bit error rate BER is detected, and the program control is shifted to step S13. At step S13, in a case wherein the detected bit error rate BER is equal to or smaller than a predetermined value R, program control is shifted to step S3, or in a case wherein the detected bit error rate BER is greater than the predetermined value R, program control is returned to step S12. Through this processing, the determination process is performed to return to the diversity operation based on the reception quality of a single branch after the diversity operation has been halted at step S7.

As described above, according to the diversity receiver of this embodiment, in a case wherein the diversity operation is halted because it is determined that desired diversity effects are not available, the bit error rate that is the reception quality for one branch is detected after the predetermined period of time has elapsed, and the diversity operation is restarted when the detected bit error rate is equal to or smaller than the predetermined value R. Therefore, so long as the apparatus is not powered off, the diversity operation can be performed continuously.

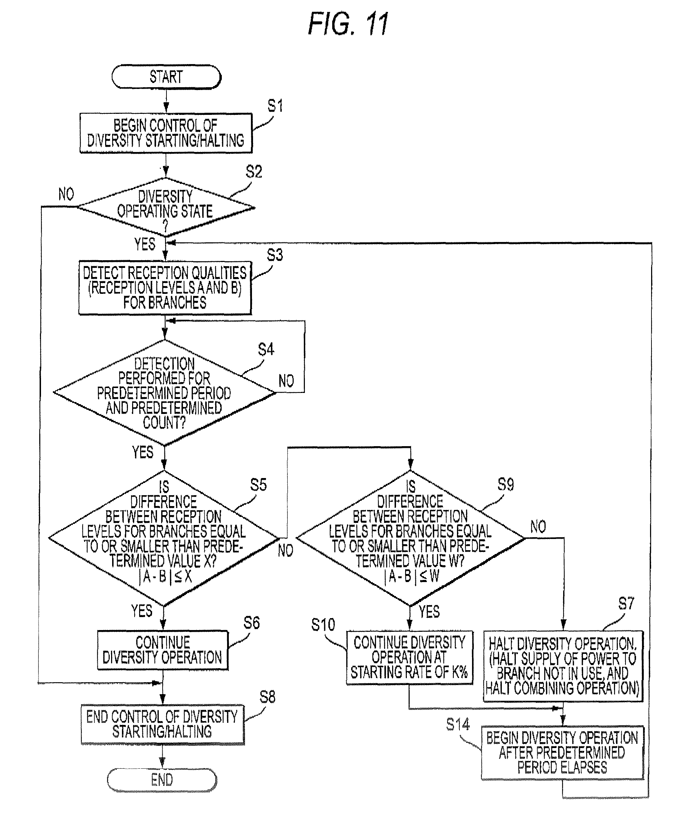

Fig. 11 is a flowchart for explaining the control, performed by a diversity receiver according to embodiment 6 of the present invention, for starting and halting the diversity operation. A difference in Fig. 11 is that step S14 is additionally provided for Fig. 8, and since the same operations are performed for steps for which the same symbols as used in Fig. 8 are provided, no further explanation for them will be given.

The process at step S14 in Fig. 11 is an operation performed after the diversity operation is halted at step S7, or after the diversity operation is continued at the starting rate of K% at step S10. After a predetermined period of time, such as one second, has elapsed, the diversity operation is started, and program control is shifted to step S3. Through this operation, the determination process is performed to return to the diversity operation after the process at step S7 or S10 has been performed.

As described above, according to the diversity receiver of this embodiment, in a case wherein the diversity operation is halted because it is determined that the desired diversity effects are not available, or in a case wherein the diversity operation is performed at the starting rate of K%, the diversity operation is resumed after a predetermined period of time has elapsed. Therefore, so long as the apparatus is not powered off, the diversity operation can be performed continuously.

In the above described embodiments 1, 3, 4 and 6, a difference of the reception qualities of the reception branches 13a and 13b has been detected using the reception levels A and B of the receivers 2a and 2b, and in the embodiments 2 and 5, a difference of the reception qualities of the reception branches 13a and 13b has been detected using the bit error rates BER A and B of the receivers 2a and 2b. However, the same effects can be obtained when a difference is detected using AGC (Automatic Gain Control) levels, PER (Packet Error Rates) or the C/N (Carrier to Noise ratio) of the receivers 2a and 2b. In this case, two or more arbitrary elements of reception levels, the AGC levels, the BER, the PER and the C/N, may be employed together.

In addition, in the above described embodiments 1 to 6, no description has been given for a case wherein there is a difference in antenna gains or performances, such as directivities, between antennas 1a and 1b. In this case, since a difference is also present in the reception qualities of the reception branches, the same effects as those described above can be obtained.

Furthermore, in the above described embodiments 1 to 6, detection of a difference in reception qualities is performed in one second, as a predetermined period of time, and one time, as a predetermined number of times, and an average obtained value is employed. For example, the intermittent detection operation may be performed for 0.1 second as a predetermined period of time and by three times as a predetermined number of times, and the average value or a peak value may be detected. The same effects can still be obtained.

The present invention has been described in detail by referring to specific embodiments; however, it will be obvious to one having ordinary skill in the art that it is possible to variously modify or correct the present invention, without departing from the spirit and the scope of the preset invention.

### Industrial Applicability

The present invention provides effects that power saving is enabled and that battery operating periods are extended, and is useful for a diversity receiver that employs a plurality of receivers, especially for cellular phones or car navigation systems that can receive ground digital broadcasts.

## Claims

1. A diversity receiver equipped with a plurality of reception branches each having an antenna, a receiver and a demodulator, the diversity receiver comprising:
a reception quality difference detection unit which detects differences, among the plurality of the reception branches, in reception qualities respectively obtained by the plurality of the reception branches; and
a diversity operation control unit which changes a ratio of a diversity reception operation that employs the plurality of reception branches to a single-reception operation that employs only a single branch in accordance with the differences in the reception qualities of the plurality of reception branches, to control both starting and halting of a diversity operation.

2. The diversity receiver according to claim 1, further comprising:
a power source control unit which controls a power supply for the plurality of the reception branches, respectively; and
a combining process unit which combines demodulated signals obtained from the plurality of reception branches,
wherein the power source control unit supplies power to the plurality of the reception branches during the diversity reception operation performed by the diversity operation control unit, and halts the supply of power to the reception branch that does not perform a reception operation among the plurality of the reception branches during the single-branch reception operation performed by the diversity operation control unit, and
wherein the combining process unit halts the combining operation when the diversity operation control unit performs the single-branch reception operation.

3. The diversity receiver according to claim 1 or 2, wherein the reception quality difference detection unit detects differences in reception qualities by employing one or more of the following elements for the plurality of the reception branches: reception levels, AGC levels, bit error rates, packet error rates and carrier to noise ratios.

4. A program for a diversity receiver equipped with a plurality of reception branches each having an antenna, a receiver and a demodulator, the program comprising the steps of:
detecting differences, among the plurality of reception branches, in reception qualities respectively obtained by the plurality of the reception branches; and
changing a ratio of a diversity reception operation that employs the plurality of reception branches to a single-reception operation that employs only a single branch in accordance with the differences in the reception qualities of the plurality of reception branches, to control both starting and halting of a diversity operation
and thereby permitting a computer to perform the steps.
